# EUROPEAN PATENT SPECIFICATION

(11) **EP 2 672 681 B1**
(45) Date of publication and mention of the grant of the patent: **02.05.2018**
(21) Application number: 13182805.5
(22) Date of filing: 29.03.2006
(51) Int. Cl.: G06F 3/0481, H04M 1/725, H04M 1/57

(54) **Method of displaying an event in a mobile terminal and mobile terminal implementing the same**
Verfahren zur Anzeige eines Ereignisses in einem tragbaren Endgerät und tragbares Endgerät dafür
Procédé d'affichage d'un événement dans un terminal mobile et terminal mobile mettant en oeuvre celui-ci

(30) Priority: 01.04.2005 KR 20050027726; 06.03.2006 KR 20060020898
(43) Date of publication of application: 11.12.2013
(62) Divisional of application: 06006531.5
(73) Proprietor: Samsung Electronics Co., Ltd., Gyeonggi-do 443-742 (KR)
(72) Inventor: Baek, Su-A, 443-742 Gyeonggi-do (KR); Lim, Kyoung-Ae, 443-742 Gyeonggi-do (KR); Cho, Seung-Chul, 443-742 Gyeonggi-do (KR); Chang, Jae-Won, 443-742 Gyeonggi-do (KR)
(74) Representative: Nederlandsch Octrooibureau

(56) References cited:
- EP-A2- 1 265 157
- WO-A-2005/027485
- US-A1- 2004 155 908

## Description

### BACKGROUND OF THE INVENTION

### Field of the Invention:

The present invention relates generally to a mobile terminal. More particularly, the present invention relates to a method of, and a mobile terminal configured for more efficiently displaying indications of occurrences of various events generated in a mobile terminal in idle mode.

### Description of the Related Art:

In recent years, the development of mobile communication technology has enabled mobile terminals to exchange a variety of messages beyond traditional phone calls, including Short Messaging Service (SMS) messages, Multimedia Messaging Service (MMS) messages, and e-mail.

Also, mobile terminals can provide a Caller Identification (CID) service so that callers can be identified.

When a message event or a missed call occurs while the mobile terminal is in idle mode, an event indication indicating the occurrence of an event appears on a display until a user presses a predetermined key, such as an OK button.

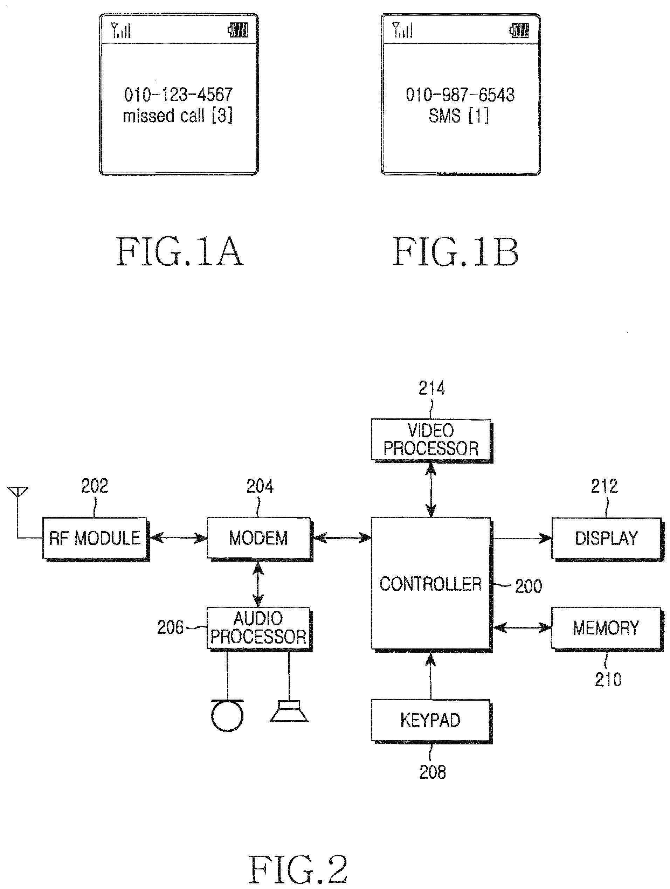

According to the conventional event indication method, when two different message events occur successively, a conventional mobile terminal displays only an indication of occurrence of the latter event on the display, although the user has not checked the former event. For instance, when a call from 010-123-4567 is missed, the user is alerted of the missed call during idle mode of the mobile terminal, as illustrated in FIG. 1A. If an SMS message is received and the missed call still has not been checked, the mobile terminal substitutes an incoming SMS message indication for the missed call indication in the display, as illustrated in FIG. 1B. One drawback with the conventional event indication method is that a user is not effectively notified when a plurality of incoming events occur. Since only an indication of the latest incoming event appears in the LCD window, at any given time the user does not know the number and types of incoming events that have occurred. Further, another drawback is that the user does not know the previous event until he checks the latest incoming event because only the latest incoming event is indicated.

WO 2005/027485 A discloses a mobile terminal comprising a registering functionality which is adapted to register terminal-based information about one or more missed call events, i. e. incoming calls which are not accepted by a user of the mobile terminal. The document further discloses receiving of network-based information about one or more missed call events registered by a PLMN to which the mobile terminal is subscribed. The cited document discloses that network-based information about one or more missed call events may comprise additionally network-based information about one or more voice messages. The cited document further discloses that an informational notification indicates to the user of the mobile terminal that a number of incoming call events have been registered but missed by the user.

US 2004/155908 A1 discloses a system and method of navigating a mobile device display including highlighting a first icon in a main portion of the mobile device display. The main portion is traversed to a tertiary tray. The tertiary tray includes a second icon. The second icon is highlighted. A single navigation key is used to traverse the main portion and to highlight the second icon.

### SUMMARY OF THE INVENTION

An object of the present invention is to address at least the above problems and disadvantages and to provide at least the advantages below. Accordingly, an object of the present invention is to provide a method of, and a mobile terminal configured for, efficiently displaying indications of various events generated in a mobile terminal in idle mode.

Another object of the present invention is to provide a method of, and a mobile terminal configured for, upon occurrences of multiple events in idle mode, displaying indications of all the events on a display.

According to an aspect of the invention, a method of displaying an event indication in a mobile terminal is provided, the method comprising:
detecting a first event;
displaying a first indication in form of a pop-up box, to notify of the detected first event;
detecting a second event;
identifying whether a type of the detected second event is the same type as the detected first event;
updating the first indication to notify of the detected second event when the type of the detected second event is the same type as the detected first event; and
displaying a second indication, in form of a pop-up box, to notify of the detected second event when the type of the detected second event is not the same type as the detected first event.

According to another aspect of the invention, a mobile terminal for displaying an event indication is provided, the mobile terminal comprising:
a display; and
a controller configured:
   to detect a first event,
   to control display of a first indication in form of a pop-up box, to notify of the detected first event,
   to detect a second event,
   to identify whether a type of the detected second event is the same type as the detected first event,
   to update the first indication to notify of the detected second event when the type of the detected second event is the same type as the detected first event, and
   to control display of a second indication, in form of a pop-up box, to notify of the detected second event when the type of the detected second event is not the same type as the detected first event.

### BRIEF DESCRIPTION OF THE DRAWINGS

The above and other exemplary objects, features and advantages of the present invention will become more apparent from the following detailed description when taken in conjunction with the accompanying drawings, in which:
FIGs. 1A and 1B illustrate conventional event indications on a display in a mobile terminal;
FIG. 2 shows a block diagram of a mobile terminal according to an exemplary embodiment of the present invention;
FIG. 3 shows a flowchart illustrating an operation for displaying an event indication in the mobile terminal according to an exemplary embodiment of the present invention;
FIGs. 4A, 4B and 4C illustrate a sequence of event pop-up box generation on a display in the mobile terminal according to an exemplary embodiment of the present invention;
FIGs. 5A and 5B illustrate a sequence of event pop-up box deletion on the display in the mobile terminal according to an exemplary embodiment of the present invention; and
FIGs. 6A to 6H illustrate a plurality of arranged pop-up boxes on the display in the mobile terminal according to an exemplary embodiment of the present invention.

Throughout the drawings, like reference numbers should be understood to refer to like elements, features, and structures.

### DETAILED DESCRIPTION OF EXEMPLARY EMBODIMENTS

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope of the claimed invention. Descriptions of well-known functions and constructions are omitted for clarity and conciseness.

FIG. 2 shows a block diagram of a mobile terminal according to an exemplary embodiment of the present invention.

In reference to FIG. 2, the mobile terminal includes a controller 200, a Radio Frequency (RF) module 202, a Modulator-DEModulator (MODEM) 204, an audio processor 206, a keypad 208, a memory 210, a display 212, and a video processor 214.

The RF module 202 implements the radio communication functionality of the mobile terminal. The RF module 202 comprises an RF transmitter (not shown) for upconverting and amplifying a transmission signal and an RF receiver (not shown) for low-noise-amplifying and downconverting a received signal.

The MODEM 204 is provided with a transmitter for encoding and modulating the transmission signal and a receiver for demodulating and decoding the received signal.

The audio processor 206 converts an electrical signal received from a microphone to audio data, and demodulates coded audio data received from the RF module 202 and outputs the audio data through a speaker. The audio processor 206 preferably comprises a CODer and DECoder (CODEC) for converting a digital audio signal received from the RF module 202 to an analog signal or for converting an analog audio signal generated from the microphone to a digital audio signal. The CODEC refers to a data CODEC for processing packet data and an audio CODEC for processing an audio signal such as voice. The CODEC can be incorporated in the controller 200.

The memory 210 may comprise a program memory and a data memory. The memory 210 stores information needed for controlling the operation of the mobile terminal and information selected according to user selection information.

The display 212 can be configured with a Liquid Crystal Display (LCD) for displaying visual data generated in the mobile terminal. If the LCD is implemented in a touch screen fashion, the display 122 can operate as an input portion.

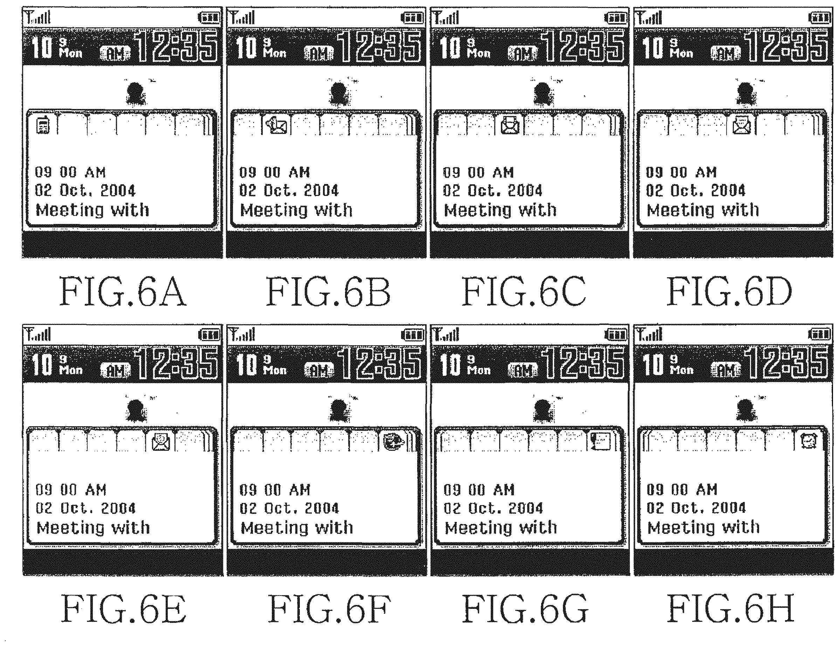

The display 212 displays various events in pop-up boxes in idle mode under the control of the controller 200. Users are notified of various events by corresponding event pop-up boxes as illustrated in FIGs. 6A to 6H. Each event pop-up box provides information about the latest event including event date and time.

The video processor 214 generates visual data by which to display a video signal. The video processor 214 processes video data received from a camera module (not shown) or memory 210 on a frame basis and outputs the frame video data according to the characteristics and size of the display 212.

The video processor 214 also includes a video CODEC (not shown) for compressing the frame video data in a predetermined method or decompressing the compressed frame video data to the original frame video data. The video CODEC can be, for example, a JPEG CODEC, an MPEG4 CODEC, a Wavelet CODEC, or any other type of CODEC.

The keypad 208 has alphanumerical keys for inputting numbers and characters and function keys for invoking functions. The user can select an event pop-up box to be activated using directional keys in the keypad 208.

The controller 200 provides overall control of the operation of the mobile terminal according to an exemplary embodiment of the present invention. Upon generation of an event during idle mode, the controller 200 determines whether an event pop-up box showing information about the same type of an event as the generated event exists. If it exists, the controller 200 updates the event pop-up box with the information about the event. After the update, the controller 200 preferably increases the count indicating the total number of events in the event pop-up box by the number of events generated.

The controller 200 also directs the display 212 to display the updated event pop-up box. If a plurality of event pop-up boxes having event information exist on the display 212, the controller 200 controls the updated event pop-up box to be displayed with the highest priority.

The event can be, for example, a missed call, a voice mail event, an SMS event, an MMS message event, a schedule event, or a Digital Rights Management (DRM) event.

If the user has checked particular events in the displayed event pop-up box, the controller 200 deletes the information of the events from the event pop-up box and decreases the event count by the number of the deleted events.

If many event pop-up boxes are to be displayed on display 212, it is preferred that only a predetermined number of event pop-up boxes are displayed as indexes, while the other event pop-up boxes are displayed as tabs.

In the absence of an event pop-up box indicating the same type of event as the generated event, the controller 200 creates an event pop-up box to store the information of the event and shows information of the event in the event pop-up box.

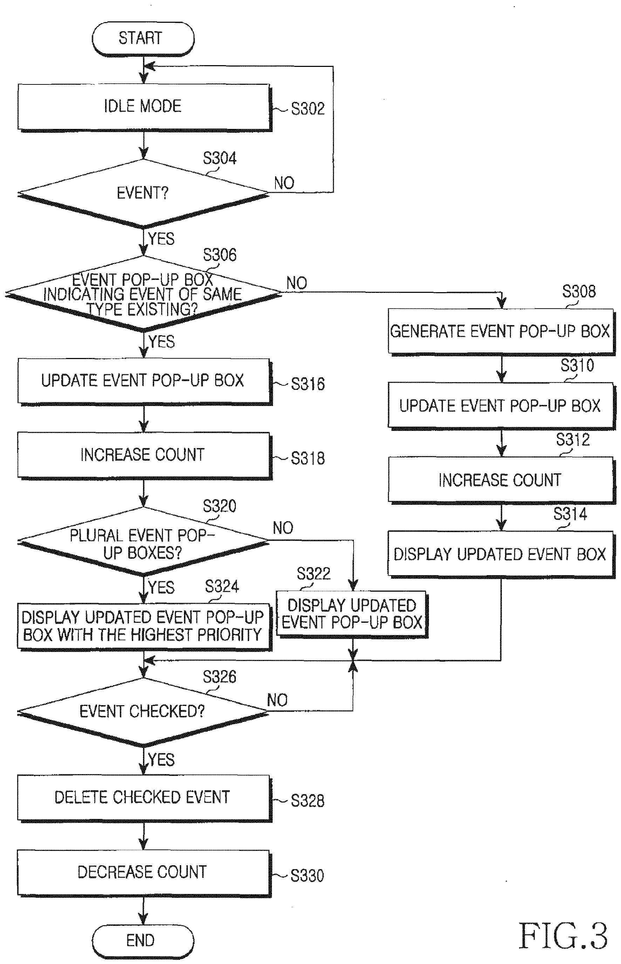

FIG. 3 shows a flowchart illustrating an operation for displaying an event indication in the mobile terminal according to an exemplary embodiment of the present invention.

Referring to FIGs. 2 and 3, the mobile terminal is in idle mode in step S302 and the controller 200 determines whether an event has occurred during idle mode in step S304. The event can be, for example, a missed call, a voice mail event, an SMS event, an MMS message event, a schedule event, or a DRM event.

A missed call is an incoming call that was not answered normally, a voice mail event is reception of a voice message, an SMS event is reception of text of a predetermined size, an MMS message event is reception of a message capable of carrying a multimedia file, a schedule event is an alarm notifying the user of a registered schedule at a registered time, and a DRM event is reception of an authentication key for a copyrighted multimedia file.

Each event is processed by a corresponding task processor. The task processor is a software module for performing a corresponding function. Each task processor monitors generation of a corresponding event under the control of an Operating System (OS). Upon generation of an event, the task processor notifies the main processor of the controller 200 of the event occurrence. For example, upon generation of a missed call event, a call task processor notifies the main processor of the controller 200 of the missed call event occurrence. Each task processor and the main processor are activated in the controller 200. In the following exemplary embodiments, the controller 200 performs the operational algorithms of the task processors and the main processor.

On the occurrence of an event, that is, when a task processor reports generation of an event to the controller 200, the controller 200 determines whether an event pop-up box containing information about the same type of event as the event exists in step S306.

The event pop-up box is a display tool allocated according to event type. It is a display folder in concept. For example, when a plurality of missed call events are generated, the missed call events are indicated in a missed call event pop-up box. When a plurality of voice mail events occur, the voice mail events are indicated in a voice mail event pop-up box.

In accordance with an exemplary embodiment of the present invention, the following event pop-up boxes are representative of those that can be defined: a missed call event pop-up box for indicating missed calls, a voice mail event pop-up box for indicating reception of voice mails, an SMS event pop-up box for indicating reception of SMS messages, a multimedia message event pop-up box for indicating reception of multimedia messages, a schedule event pop-up box for alerting the user of scheduled events, and an authentication key event pop-up box for storing and displaying an authentication key.

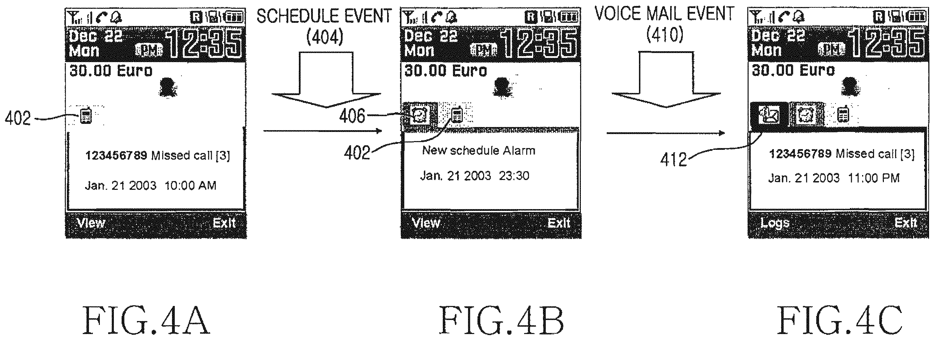

Step S306 is performed to check whether the incoming event is of the same type as an event indicated by an existing event pop-up box displayed on the display 212. For example, if the user did not check the previous missed calls, the controller 200 displays a missed call event pop-up box 402 (FIG. 4A) on the display 212 to indicate missed calls. Upon generation of a schedule event in this state, the controller 200 determines whether a schedule event pop-up box exists on the display 212 to indicate the schedule event.

In the presence of a corresponding event pop-up box, the controller 200 updates the event pop-up box with information about the generated event in step S316.

After updating the event pop-up box, the controller 200 increases the count indicating the total number of events in the event pop-up box in step S318. The count indicates the total number of events that the user has not checked in the event pop-up box.

For instance, if the user has not checked three voice mails indicated in the voice mail pop-up box, the event count is 3. Upon generation of a new voice mail event with the three voice mail messages unchecked, the event count of the voice mail event pop-up box is increased to 4. The event information refers to the contents and the date and time of the event. A variety of additional information can also be included in the event information.

The controller 200 determines whether a plurality of event pop-up boxes indicating events exist on the display 212 in step S320.

If only the updated event pop-up box exists, the controller 200 displays it on the display 212 in step S322. Simultaneously, the controller 200 displays the information of the generated event and the event count as well on the display 212.

On the other hand, if a plurality of event pop-up boxes exist, the controller 200 displays the updated event pop-up box on the display 212 with the highest priority in step S324.

Here, the controller 200 displays the updated event pop-up box with the highest priority over the other event pop-up boxes.

For example, when a new schedule event 404 occurs with a pop-up box 402 indicating a missed call event displayed at index 1 on the display 212 (FIG. 4A), a schedule event pop-up box 406 is activated with priority to show information about the schedule event 404, as illustrated in FIG. 4B.

Similarly, when a new voice mail event 410 is generated in the state shown in FIG. 4B, a voice mail event pop-up box 412 is activated first on the display 212 during idle mode, as illustrated in FIG. 4C.

If many event pop-up boxes are to be displayed on the display 212, only a predetermined number of event pop-up boxes are displayed as indexes, as illustrated in FIGs. 6A to 6E, while the other event pop-up boxes are displayed as tabs. If a user wants to activate a particular event pop-up box, he selects it using the keypad 208.

For example, when the user selects a right directional key on the display 212 illustrated in FIG. 6A, the controller 200 activates the second event pop-up box as illustrated in FIG. 6B. When the user selects the right directional key again on the display 212, illustrated in FIG. 6B, the controller 200 activates the third event pop-up box, as illustrated in FIG. 6C.

When the user selects a left directional key on the display 212 illustrated in FIG. 6B, the controller 200 activates the previous event pop-up box, illustrated in FIG. 6A.

On the other hand, in the absence of the corresponding existing event pop-up box in step S306, an event pop-up box to indicate the event is generated in step S308. If the generated event is triggered by key input from the user, the controller 200 neglects this event.

In step S310, the controller 200 updates the event pop-up box with information about the event and sets the count to an initial value. Since the event is the first to be indicated in the event pop-up box, the count is set to 1. Additional events cause the controller 200 to increase the event count, step S312. It is preferred that the count is set to the number of generated events.

In step S314, the controller 200 displays the updated event pop-up box.

The controller 200 determines whether the user has checked the indicated event in step S326. If the user has not checked the event, the controller 200 displays all created event pop-up boxes to allow the user to view the events in an organized manner as illustrated in FIG. 4C, even though the mobile terminal is turned on again or the display 212 is activated again.

If the user has checked the event, the controller 200 deletes the checked event information from the event pop-up box in step S328. It can be noted that event deletion means deletion of the event indication from the event pop-up box, not complete deletion of the event information. The actual event information is stored in a predetermined area of the memory 210, and can be deleted completely from a corresponding event folder within the memory 210 using a separately configured menu.

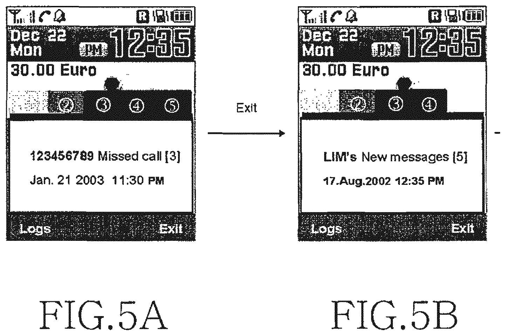

The event pop-up box displayed during idle mode can be deleted from the display 212. When a predetermined command such as, for example, "EXIT" is selected with the event pop-up box activated as illustrated in FIG. 5A, the current event pop-up box disappears as illustrated in FIG. 5B.

After deleting the checked event information, the controller 200 decreases the count by the number of deleted event indications and displays the decreased count on the display 212 in step S330.

In accordance with various exemplary embodiments of the present invention as described above, since events are indicated in the form of pop-up boxes during idle mode of a mobile terminal, and a user can easily view the event indications. Also, the event pop-up box generation and deletion algorithm according to one exemplary embodiment of the present invention leads to efficient event pop-up box management.

A method of, and a mobile terminal configured for, efficiently displaying an event indication in the form of a pop-up box during idle mode of a mobile terminal may be provided. In the method, upon occurrence of a second event in idle mode, it may be determined whether an event pop-up box indicating an occurrence of a first event of the same type as the second event exists. When the event pop-up box indicating the occurrence of the first event exists, the event pop-up box may be updated with information indicating the occurrence of the second event and displayed on a display.

In the mobile terminal, if, upon occurrence of a second event in idle mode, the event pop-up box indicating occurrence of a first event of the same type as the second event, a controller may update the event pop-up box with information indicating the occurrence of the second event, and a display displays the updated event pop-up box under control of the controller.

A method of displaying an event indication in a mobile terminal may comprise determining, upon occurrence of a second event in idle mode, whether an event pop-up box indicating an occurrence of a first event exists, the first and second events being of the same type; when the event pop-up box indicating the occurrence of the first event exists, updating the event pop-up box with information indicating the occurrence of the second event; and displaying the updated event pop-up box on a display. When a plurality of event pop-up boxes indicating occurrences of events exist, displaying the updated event pop-up box may comprise displaying the updated event pop-up box having highest priority. The event may comprise one of a missed call event, a voice mail event, a short messaging service (SMS) event, a multimedia messaging service (MMS) message event, a schedule event, and a digital rights management (DRM) event. The event pop-up box may comprise a count indicative of the number of occurred events, and updating the event pop-up box may comprise updating the count based on the occurrence of the second event. The displaying the updated event pop-up box may comprise deleting information about an event from the event pop-up box when the event is checked in the displayed event pop-up box; and decreasing the count by the number of deleted events. The displaying of the updated event pop-up box may comprise displaying a first number of event pop-up boxes as indexes; and setting a second number of the event pop-up boxes as tabs for at least one end of the display. The displaying the updated event pop-up box may further comprise moving the event pop-up box from a current activated event pop-up box according to a selected directional key; and activating the event pop-up box in the new position. The updating the event pop-up box may comprise, when the event pop-up box indicating the occurrence of the first event does not exist, generating the event pop-up box to indicate occurrence of the second event; and updating the generated event pop-up box with information about the second event. The event pop-up box may comprise a count indicative of the number of occurred events, and updating the event pop-up box may further comprise updating the count based on the occurrence of the second event. The updating the event pop-up box may further comprise neglecting a key input event.

A mobile terminal may comprise a controller for, upon occurrence of a second event in idle mode, and an event pop-up box indicating occurrence of a first event exists, the first and second events being of the same type, updating the event pop-up box with information indicating the occurrence of the second event; and a display configured to display the updated event pop-up box under control of the controller. Herein, upon occurrence of the second event in idle mode, the controller may determine whether the event pop-up box indicating occurrence of the first event exists, and may update the event pop-up box with the information indicating occurrence of the second event if the event pop-up box indicating occurrence of the first event exists. When a plurality of event pop-up boxes indicating occurrences of events exist, the controller may control the display to display the updated event pop-up having highest priority. The event may comprise one of a missed call event, a voice mail event, a short messaging service (SMS) event, a multimedia messaging service (MMS) message event, a schedule event, and a digital rights management (DRM) event. The event pop-up box may comprise a count indicative of the number of occurred events, and the controller may update the count based on the occurrence of the second event. When the event is checked in
the displayed event pop-up box, the controller may delete information about an event from the event pop-up box and decrease the count by the number of deleted events. The controller may display a first number of event pop-up boxes as indexes, and set a second number of event popup boxes as tabs for at least one end of the display. The controller may move the event pop-up box from a current activated event pop-up box according to a selected directional key, and activate the event pop-up box in the new position. When the event pop-up box indicating the occurrence of the first event does not exist, the controller may generate the event pop-up box to indicate occurrence of the second event and update the generated event pop-up box with information about the second event. The event pop-up box may comprise a count indicative of the number of occurred events, and the controller may update the count based on the occurrence of the second event. The controller may neglect a key input event.

While the invention has been shown and described with reference to certain exemplary embodiments thereof, it will be understood by those of ordinary skill in the art that various changes in form and detail may be made therein without departing from the scope of the present invention as defined by the appended claims.

## Claims

1. A method of displaying an event indication in a mobile terminal, the method comprising:
detecting a first event;
displaying a first indication in form of a pop-up box, to notify of the detected first event;
detecting a second event;
identifying whether a type of the detected second event is the same type as the detected first event;
updating the first indication to notify of the detected second event when the type of the detected second event is the same type as the detected first event; and
displaying a second indication, in form of a pop-up box, to notify of the detected second event when the type of the detected second event is not the same type as the detected first event.

2. The method of claim 1, wherein, if the type of the detected second event is not the same as the type of the detected first event, the displaying of the second indication to notify of the detected second event comprises displaying the second indication with a higher priority than the first indication.

3. The method of claim 1, wherein, if the type of the detected second event is the same as the type of the detected first event, the updating of the first indication to notify of the detected second event comprises updating a counter to indicate a number of times the same type of event has occurred.

4. The method of claim 3, further comprising:
determining if at least one of the detected first event and the detected second event is checked by a user; and
if at least one of the detected first event and the detected second event is checked by the user, decreasing the counter by a number of events checked by the user.

5. The method of claim 1, wherein the displaying of the first indication to notify of the detected first event comprises displaying information about the detected first event.

6. The method of claim 5, wherein the information about the detected first event comprises at least one of a date of the detected first event, a time of the detected first event, and a description of the detected first event.

7. The method of claim 1, wherein the type of the detected first event and the type of the detected second event each comprise one of a missed call event, a voice mail event, a short message service event, a multimedia message event, a schedule event, and a digital rights management event.

8. The method of claim 1, further comprising:
after the detecting of the first event, displaying a first icon corresponding to the detected first event.

9. The method of claim 1, further comprising:
when the type of the detected second event is not the same type as the detected first event, displaying a first icon corresponding to the detected first event and a second icon, different from the first icon, corresponding to the detected second event.

10. The method of claim 1, further comprising
indicating, when a plurality of missed call events are generated, the missed call events in a missed call event pop-up box; or
indicating, when a plurality of Short Message Service events occur, the Short Message Service events in a Short Message Service event pop-up box.

11. A mobile terminal for displaying an event indication, the mobile terminal comprising:
a display; and
a controller configured:
to detect a first event,
to control display of a first indication in form of a pop-up box, to notify of the detected first event,
to detect a second event,
to identify whether a type of the detected second event is the same type as the detected first event,
to update the first indication to notify of the detected second event when the type of the detected second event is the same type as the detected first event, and
to control display of a second indication, in form of a pop-up box, to notify of the detected second event when the type of the detected second event is not the same type as the detected first event.

12. The mobile terminal of claim 11, wherein, if the type of the detected second event is not the same as the type of the detected first event, the controller is configured to display the second indication with a higher priority than the first indication.

13. The mobile terminal of claim 11, wherein, if the type of the detected second event is the same as the type of the detected first event, the controller is configured to update a counter to indicate a number of times the same type of event has occurred.

14. The mobile terminal of claim 13, wherein the controller is further configured to determine if at least one of the detected first event and the detected second event is checked by a user, and, if at least one of the detected first event and the detected second event is checked by the user, to decrease the counter by a number of events checked by the user.

15. The mobile terminal of claim 11, wherein the controller is configured to control display of the first indication to notify of the detected first event by displaying information about the detected first event.

16. The mobile terminal of claim 15, wherein the information about the detected first event comprises at least one of a date of the detected first event, a time of the detected first event, and a description of the detected first event.

17. The mobile terminal of claim 11, wherein the type of the detected first event and the type of the detected second event each comprise one of a missed call event, a voice mail event, a Short Message Service event, a multimedia message event, a schedule event, and a digital rights management event.

18. The mobile terminal of claim 11, wherein the controller is further configured to, after the detecting of the first event, control display of a first icon corresponding to the detected first event.

19. The mobile terminal of claim 11, wherein the controller is further configured to, when the type of the detected second event is not the same type as the detected first event, control display of a first icon corresponding to the detected first event and a second icon, different from the first icon, corresponding to the detected second event.

20. The mobile terminal of claim 11, wherein the controller is further configured to
indicate, when a plurality of missed call events are generated, the missed call events in a missed call event pop-up box; or
indicate, when a plurality of Short Message Service events occur, the Short Message Service events in a Short Message Service event pop-up box.

## Patentansprüche

1. Verfahren zum Wiedergeben einer Ereignisanzeige in einem mobilen Endgerät, wobei das Verfahren Folgendes umfasst:
Erkennen eines ersten Ereignisses;
Wiedergeben einer ersten Anzeige in Form eines Popup-Feldes, um über das erkannte erste Ereignis zu informieren;
Erkennen eines zweiten Ereignisses;
Identifizieren, ob ein Typ des erkannten zweiten Ereignisses der gleiche Typ wie das erkannte erste Ereignis ist;
Aktualisieren der ersten Anzeige, um über das erkannte zweite Ereignis zu informieren, wenn der Typ des erkannten zweiten Ereignisses vom gleichen Typ wie das erkannte erste Ereignis ist; und
Wiedergeben einer zweiten Anzeige in Form eines Popup-Feldes, um über das erkannte zweite Ereignis zu informieren, wenn der Typ des erkannten zweiten Ereignisses nicht vom gleichen Typ wie das erkannte erste Ereignis ist.

2. Verfahren nach Anspruch 1, wobei, falls der Typ des erkannten zweiten Ereignisses nicht der gleiche wie der Typ des erkannten ersten Ereignisses ist, das Wiedergeben der zweiten Anzeige zum Informieren über das erkannte zweite Ereignis das Wiedergeben der zweiten Anzeige mit einer höheren Priorität als die erste Anzeige umfasst.

3. Verfahren nach Anspruch 1, wobei, falls der Typ des erkannten zweiten Ereignisses der gleiche wie der Typ des erkannten ersten Ereignisses ist, das Aktualisieren der ersten Anzeige zum Informieren über das erkannte zweite Ereignis das Aktualisieren eines Zählers umfasst, um eine Anzahl von Malen anzugeben, die der gleiche Ereignistyp stattgefunden hat.

4. Verfahren nach Anspruch 3, ferner umfassend:
Bestimmen, ob mindestens eines des erkannten ersten Ereignisses und des erkannten zweiten Ereignisses von einem Benutzer überprüft wird; und
falls mindestens eines des erkannten ersten Ereignisses und des erkannten zweiten Ereignisses vom Benutzer überprüft wird, Verringern des Zählers um eine Anzahl von Ereignissen, die von dem Benutzer geprüft werden.

5. Verfahren nach Anspruch 1, wobei das Anzeigen der ersten Anzeige, um über das erkannte erste Ereignis zu informieren, das Wiedergeben von Informationen über das erkannte erste Ereignis umfasst.

6. Verfahren nach Anspruch 5, wobei die Informationen über das erkannte erste Ereignis mindestens eines von einem Datum des erkannten ersten Ereignisses, einer Zeit des erkannten ersten Ereignisses und einer Beschreibung des erkannten ersten Ereignisses umfasst.

7. Verfahren nach Anspruch 1, wobei der Typ des erkannten ersten Ereignisses und der Typ des erkannten zweiten Ereignisses jeweils eines von einem Ereignis von verpassten Anrufen, einem Sprachmitteilungsereignis, einem Kurznachrichtendienst-Ereignis, einem Multimedianachrichten-Ereignis oder einem Zeitplanereignis und einem Managementereignis für digitale Rechte umfasst.

8. Verfahren nach Anspruch 1, ferner umfassend:
nach dem Erkennen des ersten Ereignisses, Wiedergeben eines ersten Symbols, das dem erkannten ersten Ereignis entspricht.

9. Verfahren nach Anspruch 1, ferner umfassend:
wenn der Typ des erkannten zweiten Ereignisses nicht der gleiche Typ wie das erkannte erste Ereignis ist, Wiedergeben eines ersten Symbols, das dem erkannten ersten Ereignis entspricht, und eines zweiten Symbols, das sich von dem ersten Symbol unterscheidet, entsprechend dem erkannten zweiten Ereignis.

10. Verfahren nach Anspruch 1, ferner umfassend
Anzeigen, wenn eine Mehrzahl von Ereignissen von verpassten Anrufen erzeugt wird, der Ereignisse von verpassten Anrufen in einem Popup-Feld für verpasste Anrufe; oder
Anzeigen, wenn eine Mehrzahl von Kurznachrichtendienstereignissen stattfindet, der Kurznachrichtendienstereignisse in einem Kurznachrichtendienstereignis-Popup-Feld.

11. Mobiles Endgerät zum Wiedergeben einer Ereignisanzeige, wobei das mobile Endgerät Folgendes umfasst:
einen Bildschirm; und
eine Steuerung, die zu Folgendem konfiguriert ist:
ein erstes Ereignis zu erkennen,
das Wiedergeben einer ersten Anzeige in Form eines Popup-Feldes zu steuern, um über das erkannte erste Ereignis zu informieren,
ein zweites Ereignis zu erkennen,
zu identifizieren, ob ein Typ des erkannten zweiten Ereignisses der gleiche Typ wie das erkannte erste Ereignis ist,
die erste Anzeige zu aktualisieren, um über das erkannte zweite Ereignis zu informieren, wenn der Typ des erkannten zweiten Ereignisses vom gleichen Typ wie das erkannte erste Ereignis ist, und
das Wiedergeben einer zweiten Anzeige in Form eines Popup-Feldes zu steuern, um über das erkannte zweite Ereignis zu informieren, wenn der Typ des erkannten zweiten Ereignisses nicht vom gleichen Typ wie das erkannte erste Ereignis ist.

12. Mobiles Endgerät nach Anspruch 11, wobei, falls der Typ des erkannten zweiten Ereignisses nicht der gleiche wie der Typ des erkannten ersten Ereignisses ist, die Steuerung konfiguriert ist, die zweite Anzeige mit einer höheren Priorität als die erste Anzeige abzubilden.

13. Mobiles Endgerät Anspruch 11, wobei, falls der Typ des erkannten zweiten Ereignisses der gleiche wie der Typ des erkannten ersten Ereignisses ist, die Steuerung konfiguriert ist, einen Zähler zu aktualisieren, um eine Anzahl von Malen anzugeben, die der gleiche Ereignistyp stattgefunden hat.

14. Mobiles Endgerät nach Anspruch 13, wobei die Steuerung ferner konfiguriert ist, zu bestimmen, ob das erkannte erste Ereignis und/oder das erkannte zweite Ereignis von einem Benutzer überprüft wird und ob mindestens eines von dem erkannten ersten Ereignis und dem erkannten zweiten Ereignis vom Benutzer überprüft wird, um den Zähler um eine Anzahl von Ereignissen zu verringern, die vom Benutzer überprüft werden.

15. Mobiles Endgerät nach Anspruch 11, wobei die Steuerung konfiguriert ist, die Wiedergabe der ersten Anzeige zu steuern, um über das erkannte erste Ereignis zu informieren, indem Informationen über das erkannte erste Ereignis wiedergegeben werden.

16. Mobiles Endgerät nach Anspruch 15, wobei die Informationen über das erkannte erste Ereignis mindestens eines von einem Datum des erkannten ersten Ereignisses, einer Zeit des erkannten ersten Ereignisses und einer Beschreibung des erkannten ersten Ereignisses umfasst.

17. Mobiles Endgerät nach Anspruch 11, wobei der Typ des erkannten ersten Ereignisses und der Typ des erkannten zweiten Ereignisses jeweils eines von einem Ereignis von verpassten Anrufen, einem Sprachmitteilungsereignis, einem Kurznachrichtendienst-Ereignis, einem Multimedianachrichten-Ereignis, einem Zeitplanereignis und einem Managementereignis für digitale Rechte umfasst.

18. Mobiles Endgerät nach Anspruch 11, wobei die Steuerung ferner konfiguriert ist, nach dem Erkennen des ersten Ereignisses eine Wiedergabe eines ersten Symbols entsprechend dem erkannten ersten Ereignis zu steuern.

19. Mobiles Endgerät nach Anspruch 11, wobei die Steuerung ferner konfiguriert ist, wenn der Typ des erkannten zweiten Ereignisses nicht der gleiche Typ wie das erkannte erste Ereignis ist, die Wiedergabe eines ersten Symbols, das dem erkannten ersten Ereignis entspricht, und eines zweiten Symbols, das sich von dem ersten Symbol unterscheidet, entsprechend dem erkannten zweiten Ereignis zu steuern.

20. Mobiles Endgerät nach Anspruch 11, wobei die Steuerung ferner konfiguriert ist,
wenn eine Mehrzahl von Ereignissen von verpassten Anrufen erzeugt wird, die Ereignisse von verpassten Anrufen in einem Popup-Feld für Ereignisse von verpassten Anrufen anzuzeigen; oder,
wenn eine Mehrzahl von KurznachrichtendienstEreignissen stattfindet, die KurznachrichtendienstEreignisse in einem Kurznachrichtendienst-Ereignis-Popup-Feld anzuzeigen.

## Revendications

1. Procédé d'affichage d'une indication d'événement dans un terminal mobile, le procédé comprenant :
la détection d'un premier événement ;
l'affichage d'une première indication sous la forme d'une fenêtre contextuelle, pour la notification du premier événement détecté ;
la détection d'un deuxième événement ;
l'identification si un type du deuxième événement détecté est identique à un type du premier événement détecté ;
la mise à jour de la première indication pour la notification du deuxième événement détecté lorsque le type du deuxième événement détecté est identique au type du premier événement détecté ; et
l'affichage d'une deuxième indication, sous la forme d'une fenêtre contextuelle, pour la notification du deuxième événement détecté lorsque le type du deuxième événement détecté est différent du type du premier événement détecté.

2. Procédé selon la revendication 1, dans lequel, si le type du deuxième événement détecté est différent du type du premier événement détecté, l'affichage de la deuxième indication pour la notification du deuxième événement détecté comprend l'affichage de la deuxième indication avec une priorité supérieure à celle de la première indication.

3. Procédé selon la revendication 1, dans lequel, si le type du deuxième événement détecté est identique au type du premier événement détecté, la mise à jour de la première indication pour la notification du deuxième événement détecté comprend la mise à jour d'un compteur pour l'indication d'un nombre de fois que le même type d'événement est survenu.

4. Procédé selon la revendication 3, comprenant en outre :
la détermination si au moins l'un du premier événement détecté et du deuxième événement détecté est contrôlé par un utilisateur ; et
si au moins l'un du premier événement détecté et du deuxième événement détecté est contrôlé par l'utilisateur, la réduction du compteur d'un nombre d'événements contrôlés par l'utilisateur.

5. Procédé selon la revendication 1, dans lequel l'affichage de la première indication pour la notification du premier événement détecté comprend l'affichage d'informations relatives au premier événement détecté.

6. Procédé selon la revendication 5, dans lequel les informations relatives au premier événement détecté comprennent au moins l'un d'une date du premier événement détecté, d'un temps du premier événement détecté, et d'une description du premier événement détecté.

7. Procédé selon la revendication 1, dans lequel chacun du type du premier événement détecté et du type du deuxième événement détecté comprend l'un d'un événement d'appel manqué, d'un événement de messagerie vocale, d'un événement de service de message court, d'un événement de message multimédia, d'un événement de programmation et d'un événement de gestion de droits numériques.

8. Procédé selon la revendication 1, comprenant en outre :
après la détection du premier événement, l'affichage d'une première icône correspondant au premier événement détecté.

9. Procédé selon la revendication 1, comprenant en outre :
lorsque le type du deuxième événement détecté est différent du type du premier événement détecté, l'affichage d'une première icône correspondant au premier événement détecté et d'une deuxième icône, différente de la première icône, correspondant au deuxième événement détecté.

10. Procédé selon la revendication 1, comprenant en outre :
l'indication, lorsqu'une pluralité d'événements d'appel manqué sont générés, des événements d'appel manqué dans une fenêtre contextuelle d'événements d'appel manqué ; ou
l'indication, lorsqu'une pluralité d'événements de service de message court surviennent, des événements de service de message court dans une fenêtre contextuelle d'événements de service de message court.

11. Terminal mobile permettant l'affichage d'une indication d'événement, le terminal mobile comprenant :
un affichage ; et
un organe de commande configuré pour effectuer :
la détection d'un premier événement,
la commande de l'affichage d'une première indication sous la forme d'une fenêtre contextuelle, pour la notification du premier événement détecté,
la détection d'un deuxième événement,
l'identification si un type du deuxième événement détecté est identique à un type du premier événement détecté,
la mise à jour de la première indication pour la notification du deuxième événement détecté lorsque le type du deuxième événement détecté est identique au type du premier événement détecté, et
la commande de l'affichage d'une deuxième indication, sous la forme d'une fenêtre contextuelle, pour la notification du deuxième événement détecté lorsque le type du deuxième événement détecté est différent du type du premier événement détecté.

12. Terminal mobile selon la revendication 11, dans lequel, si le type du deuxième événement détecté est différent du type du premier événement détecté, l'organe de commande est configuré pour effectuer l'affichage de la deuxième indication avec une priorité supérieure à celle de la première indication.

13. Terminal mobile selon la revendication 11, dans lequel, si le type du deuxième événement détecté est identique au type du premier événement détecté, l'organe de commande est configuré pour effectuer la mise à jour d'un compteur pour l'indication d'un nombre de fois que le même type d'événement est survenu.

14. Terminal mobile selon la revendication 13, dans lequel l'organe de commande est en outre configuré pour effectuer la détermination si au moins l'un du premier événement détecté et du deuxième événement détecté est contrôlé par un utilisateur ; et, si au moins l'un du premier événement détecté et du deuxième événement détecté est contrôlé par l'utilisateur, la réduction du compteur d'un nombre d'événements contrôlés par l'utilisateur.

15. Terminal mobile selon la revendication 11, dans lequel l'organe de commande est configuré pour effectuer l'affichage de la première indication pour la notification du premier événement détecté par l'affichage d'informations relatives au premier événement détecté.

16. Terminal mobile selon la revendication 15, dans lequel les informations relatives au premier événement détecté comprennent au moins l'un d'une date du premier événement détecté, d'un temps du premier événement détecté, et d'une description du premier événement détecté.

17. Terminal mobile selon la revendication 11, dans lequel chacun du type du premier événement détecté et du type du deuxième événement détecté comprend l'un d'un événement d'appel manqué, d'un événement de messagerie vocale, d'un événement de service de message court, d'un événement de message multimédia, d'un événement de programmation et d'un événement de gestion de droits numériques.

18. Terminal mobile selon la revendication 11, dans lequel l'organe de commande est en outre configuré pour effectuer, après la détection du premier événement, la commande de l'affichage d'une première icône correspondant au premier événement détecté.

19. Terminal mobile selon la revendication 11, dans lequel l'organe de commande est en outre configuré pour effectuer, lorsque le type du deuxième événement détecté est différent du type du premier événement détecté, la commande de l'affichage d'une première icône correspondant au premier événement détecté et d'une deuxième icône, différente de la première icône, correspondant au deuxième événement détecté.

20. Terminal mobile selon la revendication 11, dans lequel l'organe de commande est en outre configuré pour effectuer :
l'indication, lorsqu'une pluralité d'événements d'appel manqué sont générés, des événements d'appel manqué dans une fenêtre contextuelle d'événements d'appel manqué ; ou
l'indication, lorsqu'une pluralité d'événements de service de message court surviennent, des événements de service de message court dans une fenêtre contextuelle d'événements de service de message court.
